**Europäisches Patentamt**

**European Patent Office**

**Office européen des brevets**

(19)

(11) **EP 1 372 259 A1**

(12) **EUROPEAN PATENT APPLICATION**

(43) Date of publication:
**17.12.2003 Bulletin 2003/51**

(51) Int Cl.⁷: **H02P 7/29**, H03K 17/00

(21) Application number: **02425387.4**

(22) Date of filing: **14.06.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **STMicroelectronics S.r.l.**
**20041 Agrate Brianza (Milano) (IT)**

(72) Inventor: **Oboe, Roberto**
**36100 Vicenza (VI) (IT)**

(74) Representative: **Maccalli, Marco et al**
**Maccalli & Pezzoli S.r.l.,**
**Via Settembrini, 40**
**20124 Milano (IT)**

(54) **Method and apparatus for driving complex impedance loads in voltage-mode**

(57) A method of driving an electrical load (**113**) having a complex electrical impedance, such as a voice-coil motor controlling the position of a read/write head in a data storage disk drive system, comprises providing a voltage-mode driver (**201**) generating drive signals for the electrical load in response to drive commands. Compensated commands for the voltage-mode driver are generated filtering (**203**) the drive commands, compensating a phase shift between electrical quantities (**V(t), I(t)**) delivered to the electrical load. The voltage-mode drive thus emulates a conventional, but more costly, current-mode drive. In a preferred embodiment, the method comprises estimating (**205**) characteristic parameters ($R_t$) of the electrical load during the operation, and adapting the filtering to the estimated characteristic parameters. The estimation comprises implementing an extended Kalman filtering algorithm.

**FIG. 2**

EP 1 372 259 A1

**Description**

The present invention generally relates to driver circuits, and, more particularly to voltage-mode driver circuits. Even more particularly, the invention concerns a voltage-mode driver circuit adapted for driving complex impedance loads, i.e. loads having a transfer (admittance) function with one or more poles or zeros, such that the load current does not continuously reflect the voltage applied.

An example of a complex impedance load is a motor, which is an inductive load. Motors are used in a wide variety of applications.

For example, in current, high-density disk drive storage systems, such as hard disk drives (HDDs), a voice coil motor (VCM) controls the position of a read/write head with respect to a disk surface. The VCM is inserted in a closed control loop. Exploiting data recorded at various locations on the disk surface (such as track numbers univocally identifying each recording track, and sinusoidal burst signals staggered in position between adjacent tracks), information about the head position is obtained, and a head position error signal is calculated and fed into an electromechanical servo position system.

The servo position system includes a current-mode driver, controlled by a servo positioning system controller, delivering a controlled current to the VCM. The current-mode driver comprises a high-power linear amplifier and a shunt resistor for measuring the actual current delivered to the VCM. The difference between the measured current and a reference current provided by the servo controller is amplified by the linear amplifier.

The control loop has a relatively large closed-loop bandwidth, typically of 50 KHz; this allows designing the servo controller without having to take into account the dynamics of the current-mode driver: roughly speaking, the designer of the servo controller can consider a static transfer function between the reference current and the actual current delivered to the VCM.

Current-mode drivers for driving VCMs have proven to be very reliable and to enable quite precise a control of the read/write head position, even in current high-density hard disk drives. An advantage of using a current-mode driver is that the current flowing through the VCM does not depend on the VCM electrical impedance, nor on the electromotive force generated by the rotational speed.

However, current-mode drivers are rather costly, both in terms of dissipated power and in terms of components cost. The power dissipated is high due to both the linear amplifier and the shunt resistor. Linear power amplifiers require a large silicon die area, and additional components, such as the shunt resistor, are required.

In order to drastically reduce the costs, the measurement of the current delivered to the VCM should be dispensed for. This means eliminating the current control loop.

An apparently readily available solution to the problem is replacing the current-mode driver with a voltage-mode driver. This solution has not been pursued so far, mainly because, differently from the current-mode driver, the performance of a voltage-mode driver is heavily affected by the VCM dynamics. This would require completely redesigning the servo controller, something which makes manufacturers of disk drive systems very reluctant.

In view of the state of the art outlined, it has been an object of the present invention to provide a voltage-mode driver circuit adapted to be used for precisely driving complex impedance loads, such as VCMs of hard disk drives, and that can readily substitute common current-mode drivers.

According to an aspect of the present invention, such an object has been attained by means of a method of driving an electrical load having a complex electrical impedance as set forth in claim 1.

Summarising, the method comprises providing a voltage-mode driver generating drive signals for the electrical load in response to drive commands.

The drive commands for the voltage-mode driver are filtered for obtaining compensated drive commands compensating a phase shift between electrical quantities delivered to the electrical load, and the compensated commands are supplied to the voltage-mode driver.

According to another aspect of the present invention, a driver circuit for driving a complex electrical impedance load as set forth in claim 9 is provided.

Briefly stated, the circuit comprises a voltage-mode driver generating drive signals for the electrical load in response to drive commands, and a drive commands generator generating the drive commands.

A compensation filter receives the drive commands and supplies the voltage-mode driver with compensated drive commands, compensating a phase shift between electrical quantities delivered to the electrical load by the voltage-mode driver.

The features and advantages of the present invention will appear from the following detailed description of an embodiment thereof, provided merely by way of non-limiting example, made in connection with the annexed drawings, wherein:

> **FIG. 1** is a block diagram of a hard disk drive control system in which the voltage-mode driver circuit and method according to the present invention are implemented;

**FIG. 2** shows in greater detail the voltage-mode driver circuit, in an embodiment of the present invention;

**FIG. 3** shows in greater detail a voltage amplifier of the voltage-mode driver circuit, in an embodiment of the present invention;

**FIG. 4** shows a compensation pre-filter for the voltage-mode driver circuit, in an embodiment of the present invention.

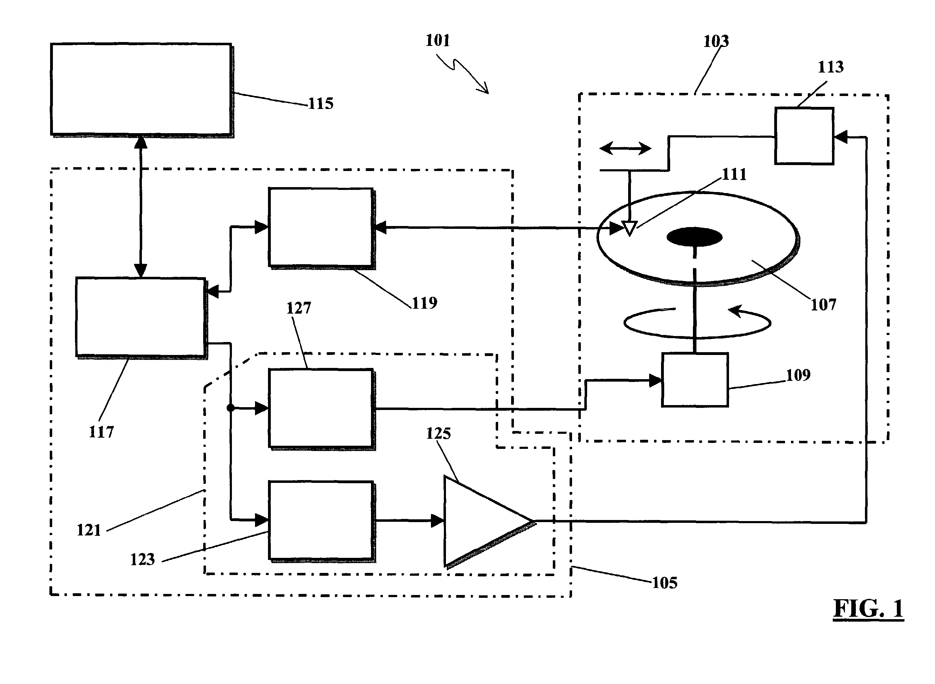

Referring to the drawings, **FIG. 1** schematically illustrates a hard disk drive system **101** in which the present invention is embodied. The disk drive system **101** includes a hard disk drive assembly **103** and a hard disk drive controller unit **105** controlling the hard disk drive assembly **103**.

The hard disk drive assembly **103** typically includes a plurality of magnetic disks **107**, a spin motor **109** for spinning the disks **107,** read/write means for transferring data to/from the disks, including a read/write head or system of heads **111** and a voice coil motor (VCM) **113** for positioning the read/write heads **111** at specific locations with respect to the disk surfaces.

The hard disk drive controller unit **105** responds to a host computer **115**, such as a personal computer, a server, a workstation or the like, requiring access to bulk data storage capabilities offered by the hard disk drive assembly **103**. Through the hard disk controller unit **105**, the host computer **115** performs specific functions on the hard disk drive assembly **103**, such as reading and writing data, and obtaining state information such as defect tables, error status and the like.

The hard disk drive controller unit **105** includes a disk drive controller processor **117**, communicating with the host computer **115** through an input/output circuitry, and memory resources (RAM and ROM, not shown in the drawing) associated with the disk drive controller processor **117**. The disk drive controller processor **117** receives and processes requests and commands from the host computer **115**, and generates appropriate responses thereto, including read data, state information and/or error codes, depending on the specific operation that the host computer **115** requires.

The hard disk drive controller unit **105** also includes a read and write channel electronic circuits, depicted as a single block **119**, for pre-processing and amplifying data read from the magnetic disks as well as for amplifying data to be written onto the disks, and a servo control **121** generating drive signals that control the VCM **113** and the spin motor **109**.

The drive signals for the VCM **113** are generated by a read/write head position control circuit **123,** receiving commands from the disk drive controller processor **117**, and a VCM driver circuit **125** that receives drive commands from the read/write head position control circuit **123.** According to the present invention, the VCM driver circuit **125** includes a voltage-mode driver circuit, delivering controlled voltage signals to the VCM **113**. Subjected to such controlled voltage signals, the VCM **113** precisely controls the position of the read/write head or system of heads **111** with respect to the surface or surfaces of the disk or disks **107**.

The drive signal for the spin motor **109** are generated by a spin control circuit **127**, also receiving commands from the disk drive controller processor **117**. Preferably, but not limitatively, also the spin control circuit **127** includes a voltage-mode control circuit. The spin control circuit **127** regulates the speed of the spin motor **109** in response to commands from the disk drive controller processor **117**.

The host computer **115** sends write commands and write data to the hard disk drive controller unit **105** for writing the write data onto the disks **107** in the hard disk drive assembly **103**; similarly, the host computer **115** sends read commands to retrieve previously written data from the disks **107.** In both cases, the host computer **115** provides to the hard disk drive controller unit **105** an indication of a specific location or set of locations on the disks **107** in which or from which the data are to be written or retrieved.

The data to be written onto or that are retrieved from the disks **107** are typically buffered in a buffer memory, accessible by the disk drive controller processor **117**, and subsequently delivered to the hard disk drive assembly **103** or to the host computer **115**. Buffering the data in the buffer memory allows overcoming differences between the operating speed of the host computer **115** and that of the hard disk drive assembly **103**. In place of or in addition to the buffer memory, a cache memory can be used.

Through the read channel circuit, the disk drive controller processor **117** obtains data and control information stored on the disks **107**. In particular, control information such as servo control data, phase lock oscillator synchronization patterns, and servo burst signals are encoded into specific portions of the disks **107**. The disk drive controller processor **117** uses this information to generate appropriate commands for the spin control circuit **127** and the read/write head position control circuit **123.**

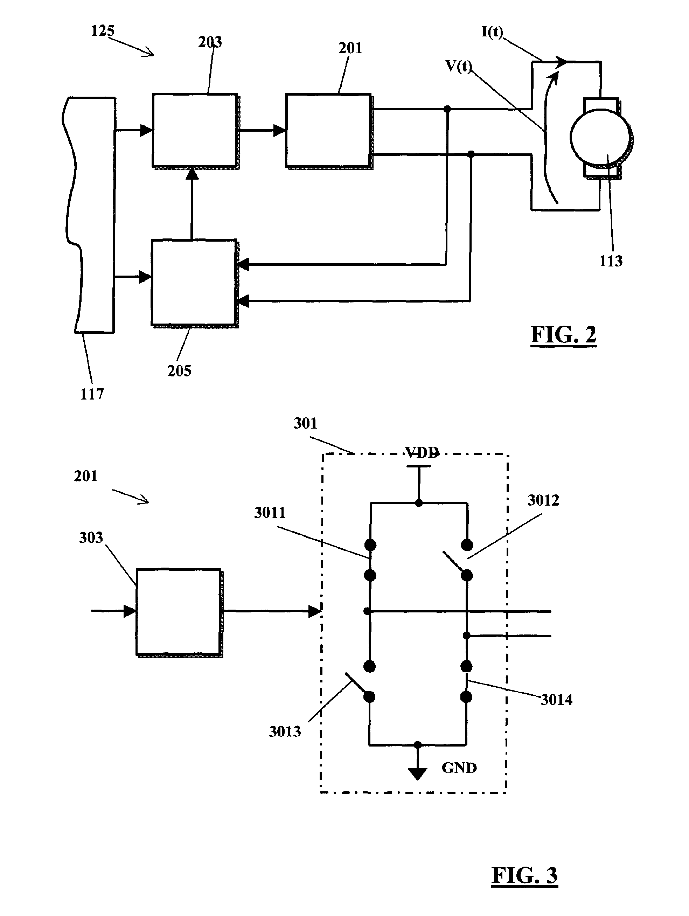

**FIG. 2** shows in greater detail the VCM driver circuit **125,** in an embodiment of the invention. Block **201** schematically represents a voltage amplifier, delivering the controlled voltage signals to the VCM **113**.

Due to the fact that the VCM **113** is a complex impedance load for the voltage amplifier **201,** and particularly an inductive load, any variation in the input voltage **V(t)** to the VCM **113** produces a variation in the VCM current **I(t)** that depends not only on the VCM input voltage **V(t),** but also on the resistance and inductance of the VCM windings. Additionally, the VCM current **I(t)** depends on VCM back electro-motive force, which is proportional to the VCM rotation speed. Adopting a simplified model of the VCM, the following transfer (admittance) function VI(s) can be derived:

$$VI(s) = \frac{sJ}{s^2 JL + sJR_t + K_t^2} \qquad (1)$$

where s is a complex variable, $R_t$ and L are the resistance and inductance of the VCM windings, J is the mechanical inertia of the VCM and $K_t$ is VCM torque constant.

It can be seen that the admittance function VI(s) has a zero in the origin (s = 0), thereby the static gain is null, and a pair of real poles (solutions of the equation $s^2 JL + sJR_t + K_t^2 = 0$). The admittance function VS(s) thus has the characteristic shape of a band-pass filter. This shape is quite different from that of the closed-loop transfer function of a conventional current-mode driver circuit, which has instead the characteristic shape of a low-pass filter with a pole at a relatively high frequency (typically, 20 KHz).

As a consequence, while in the conventional current-mode drive a variation in the voltage at the input of the closed control loop produces a proportional and in-phase variation in the VCM current (at least in the frequency range of interest), the above admittance function VS(s) shows that the variation in the VCM current **I(t)** produced by a change in the voltage **V(t)** is attenuated and out of phase, in particular lagged (in an inductive load the current does cannot change instantaneously in response to a sudden change in the applied voltage). This renders the VCM control not precise, as instead required in modern high-density hard disk drives.

In view of this problems, according to the present invention, a compensation pre-filter **203** is inserted upstream the voltage amplifier **201**. The compensation pre-filter 203 receives commands from the disk drive controller processor **117** and generates filtered, compensated commands for the voltage amplifier **201.** The compensation pre-filter **203** is designed to have a transfer function F(s) such that

$$P(s) = F(s) \cdot VI(s) = \frac{P_{gain}}{1 + s/\omega_{cut}} \qquad (2)$$

where P(s) is the overall transfer (admittance) function of the compensation pre-filter **203** and the VCM **113.** The one-pole transfer function P(s) has the characteristic shape of a low-pass filter, similarly to the closed-loop transfer function of the conventional current-mode drive. $P_{gain}$ is the static gain, and $\omega_{cut}$ is chosen to have a value close to the cut-off frequency of the current-mode control loop (20 KHz, typically).

The transfer function F(s) of the compensation pre-filter **203** shall thus be

$$F(s) = \frac{P(s)}{VI(s)} = \frac{P_{gain}}{1 + s/\omega_{cut}} \cdot \frac{s^2 JL + sJR_t + K_t^2}{sJ} \qquad (3)$$

In this way, the voltage-mode VCM driver circuit **125** behaves as and can directly replace a conventional current-mode driver circuit, with the significant advantage of having a lower power dissipation (no resistive shunt and high-power linear amplifier needed) and requiring less silicon area.

A better pre-filter design is achieved if a finer VCM model is adopted, which is closer to the real system. Just to cite some, the non-linear, viscous friction introduced by the VCM pivot bearings and the stiffness of the flexible cable carrying the control signals to the VCM and the read/write signals to the head from the electronic circuitry, are additional aspects that can be taken into account when modelling the VCM **113**. With these additional parameters, the transfer function of the VCM (confirmed by experimental measures) results to have a non-null static gain and a resonant behaviour in the low-frequency range, while a pole is present at a higher frequency, close to $R_t/L$ (roll-off frequency). Experiments have shown that a compensation pre-filter designed to have the transfer function of a high-pass filter, with a zero approximately located at the roll-off frequency $R_t/L$ (of the order of 10 KHz), cancelling the pole at $R_t/L$ in the VCM admittance function, and a pole at a very high frequency (approximately 40 KHz) has levels of performance quite close to those of the conventional current-mode driver circuit.

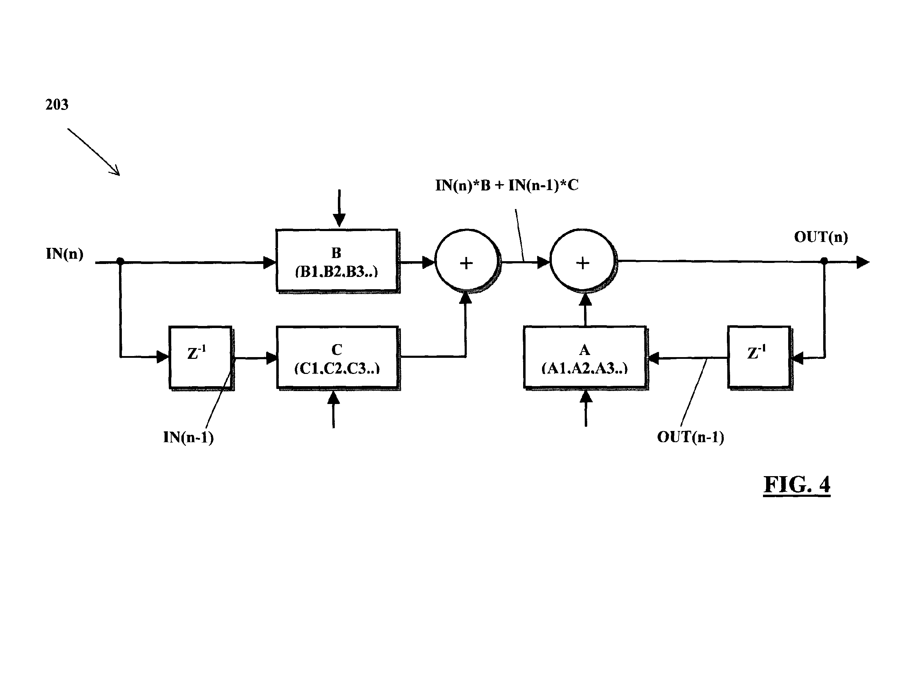

In **FIG. 3** an embodiment of the voltage amplifier **201** is shown, comprising a switched power driver circuit **301** controlled by a pulse width modulation (PWM) or, alternatively, a phase shift modulation (PSM) circuit **303** fed by the output of the compensation pre-filter **203**. In the shown example, the power driver circuit **301** is configured as an "H-bridge" driver circuit; four switches **3011 - 3014** are provided, the on/off state of each switch being controlled by a respective signal of the signals issued by the PWM/PSM circuit **303**. Switching the terminals of the VCM between a supply voltage **VDD** and a reference voltage **GND**, the power driver circuit **301** provides current to drive the VCM **113**.

The implementation of the voltage amplifier **201** by a switched-mode amplifier is not to be considered limitative;

any known voltage amplifying scheme can in principle be adopted, either switched-mode or linear, albeit practically some of them will result disadvantageous form an efficiency considerations. In particular, a switched-mode amplifier is preferred in view of a fully digital implementation of the voltage-mode drive. In this case, it is worth observing that using a PWM power stage the voltage applied to the VCM is proportional to both the duty cycle and to the supply voltage **VDD**. This means that the voltage applied to the VCM may vary with the supply voltage, which may lead to an overall reduction in performance. However, this problem can be easily solved, since the supply voltage is usually measured with a certain degree of accuracy, so the actual applied voltage can be easily computed.

The compensation pre-filter **203** can be implemented in analogue or digital form. The digital implementation of the compensation pre-filter is preferred in view of a fully digital implementation of the whole voltage-mode driver circuit. In this case, the sample frequency (Fc) to be used in the compensation pre-filter shall be significantly higher than the servo sampling frequency (Fs) of the disk (the frequency at which the servo control signals are received by the disk drive controller processor, given by the number of disk sector per disk track multiplied by the number of disk turns per second), typically set at 13 KHz, since the analogue equivalent compensation pre-filter operates up to a much higher frequency; adopting the same sampling frequency as the servo sampling frequency would produce unacceptable phase and gain warping near the Nyquist frequency. Experiments have demonstrated that a filter sampling frequency approximately eight times higher than the servo sampling frequency is suitable; this means that the pre-filter **203** produces eight commands for the voltage amplifier **201** during one servo sampling period. Synchronisation between the servo sampling and the filter can be guaranteed by using a phase-locked loop, generating eight equally spaced pulses during one servo sampling period.

**FIG. 4** shows a possible digital implementation of the compensation pre-filter **203.** A common way to design a digital filter is to calculate the Laplace transform of the filter analogue equivalent, and then obtaining the Z transform. Coefficients **A, B** and **C** are calculated off-line for a particular VCM either empirically or mathematically, and are then loaded in; the coefficient values depend on the characteristics of the (admittance function of the) VCM, particularly the inductance and the resistance of the VCM windings. **IN(n)** denotes the $n^{th}$ sample of the filter input, i.e. the (sampled) command coming from the read/write head position control circuit 123, which is sampled at the filter sample rate Fs (approximately 100 KHz, according to the discussion in the foregoing); similarly, **OUT(n)** denotes the $n^{th}$ sample of the filter output. The $n^{th}$ input sample **IN(n),** weighted by the coefficient **B,** is added to the $(n-1)^{th}$ input sample **IN(n-1),** in turn weighted by the coefficient **C.** The sum **IN(n)\*B + IN(n-1)\*C** is then added to the $(n-1)^{th}$ sample of the filter output **OUT(n-1),** weighted by the coefficient A.

The compensation pre-filter can be implemented in a pure software fashion, for example by the processor **117**.

A compensation pre-filter such as the one described, designed to have a transfer function with a zero approximately in correspondence of the pole $R_t/L$ in the VCM admittance function, performs quite well provided that the admittance function of the VCM does not change over time. In the practice, this is not so. In particular, the value of the VCM windings resistance $R_t$ varies with the VCM operating temperature; resistance variations in the range +/- 20% around the nominal value are experimentally observed. When the value of the windings resistance $R_t$ changes, the shape of the VCM admittance function varies, because the pole $(R_t/L)$ is found at a different frequency compared to the nominal one (at the reference temperature). The pre-filter is no more capable of operating the desired compensation, and the performance of the voltage-mode driver circuit worsens.

Experimental results have shown that if the compensation pre-filter **203** is designed assuming a nominal VCM windings resistance value which is higher than the actual one, a transfer function P(s) is obtained which is characterised by a certain degree of phase lead at high frequencies, which does not alter dramatically the voltage-mode drive performance. On the contrary, designing the filter on a nominal VCM windings resistance lower than the actual one causes a high-frequency roll-off that unacceptably degrades the voltage-mode drive performance.

The above-discussed results suggest that it is preferable to design the pre-filter assuming a VCM windings resistance value higher than the actual one at ambient temperature, because the temperature, and thus the windings resistance, will normally be higher when the VCM is operating.

In a preferred embodiment of the present invention, an adaptive compensation pre-filter **203** is used, and an on-line identification procedure of the VCM characteristic parameters is adopted for allowing the pre-filter tracking variation in such parameters. This is schematically depicted in **FIG. 2,** wherein block **205** denotes a unit implementing the procedure for the on-line identification of the VCM characteristic parameters. The unit **205** monitors the controlled voltage signals delivered to the VCM **113**, and receives from the disk drive controller processor **117** information on the read/write heads position, which in turn the processor **117** derives from the read channel **119**. The unit **205** then controls the compensation pre-filter **203**, adapt it to the current VCM characteristic parameters. In the exemplary pre-filter embodiment shown in **FIG. 4,** the coefficients **A, B, C** are changed, so as to change the frequency of the zero introduced by the compensation pre-filter **203;** for example, for each coefficient **A, B, C** a respective set of values **(A1,A2,A3), (B1,B2,B3)** and **(C1,C2,C3)** is defined, and the coefficient value is chosen within the predefined set of values according to the instructions of the unit **205**.

In particular, the Applicant has observed that the VCM parameter that is more affected by variations due to changes in the operating conditions such as temperature is the VCM windings resistance $R_t$; other parameters such as the moment of inertia J, the torque constant $K_t$ and the inductance L are scarcely affected by changes in operating conditions, and can thus be considered constant.

This observation allows simplifying the on-line estimation procedure of the VCM characteristic parameters; in particular, it is unnecessary to try and estimate the whole VCM transfer (admittance) function, being sufficient to estimate the variations of the windings resistance $R_t$.

According to an embodiment of the invention, the procedure for the on-line estimation of the VCM windings resistance $R_t$ is implemented by means of an extended Kalman filter (EKF).

The EKF is an optimal least-square estimator algorithm, suitable for estimating the states of dynamic non-linear systems. In few words, the EKF linearizes the non-linear system to be estimated around a current working point, and then applies the Kalman filtering technique to the linearised system.

In order to be treatable with EKF, the non-linear dynamics of the system must have the following form:

$$\dot{\mathbf{x}}(t) = \mathbf{f}(\mathbf{x},t) + \mathbf{B}u(t) + \boldsymbol{\sigma}(t)$$
$$y(t) = \mathbf{h}(\mathbf{x},t) + \mu(t)$$

$$(4)$$

where the vector $\mathbf{x}(t)$ denotes the system state, $y(t)$ is the result of the measurement operated on the system (in the present case the read/write head position derived from the read channel), and $\sigma(t)$ and $\mu(t)$ are zero-mean white Gaussian noises with covariance $\mathbf{Q}(t)$ and $\mathbf{R}(t)$, respectively, and independent from the system state $\mathbf{x}(t)$. The initial state vector $\mathbf{x}(t_0)$ is described by a Gaussian random vector, with a mean value $x_0$ and covariance matrix $\mathbf{P}_0$, and u is the deterministic input, in the present case the voltage $\mathbf{V(t)}$ applied to the VCM.

Let it be assumed that an external disturbance torque $\tau_d$ acts on the VCM, and that the windings resistance $R_t$ is not constant, but slowly varying. Both $\tau_d$ and $R_t$ are taken as state variables, whose values are independent from the value of the other states. A suitable stochastic model for both variables is the so-called "random walk", i.e.:

$$\dot{R}_t = w_R \text{ and } \dot{\tau}_d = w_\tau$$

where both $w_\tau$ and $w_R$ are uncorrelated, Gaussian white noises. The other state variables of the system are the angular position $\vartheta$, rotation velocity $\omega$ and absorbed current i of the VCM. With such definitions, the non-linear system dynamics is the following:

$$\begin{bmatrix} \dot{\vartheta} \\ \dot{\omega} \\ \dot{i} \\ \dot{R}_t \\ \dot{\tau}_d \end{bmatrix} = \begin{bmatrix} \dot{x}_1 \\ \dot{x}_2 \\ \dot{x}_3 \\ \dot{x}_4 \\ \dot{x}_5 \end{bmatrix} = \begin{bmatrix} x_2 \\ \frac{1}{J}(Kx_3 - x_5) - \frac{B}{J}x_2 \\ -Kx_2\frac{1}{L} - \frac{x_4 x_3}{L} \\ 0 \\ 0 \end{bmatrix} + \begin{bmatrix} 0 \\ 0 \\ \frac{1}{L} \\ 0 \\ 0 \end{bmatrix} u + \begin{bmatrix} \sigma_1 \\ \sigma_2 \\ \sigma_3 \\ w_\tau \\ w_R \end{bmatrix} = \mathbf{f}(x,t) + \mathbf{B}u(t) + \boldsymbol{\sigma}(t) \qquad (7)$$

$$y = \mathbf{h}(x) + \mu = x_1 + \mu$$

For this system, which is clearly non-linear, an EKF is derived. First of all, let the Jacobian matrices be defined:

$$F(x(t)) = \frac{\partial f}{\partial x}\bigg|_{x=x(t)} = \begin{bmatrix} 0 & 1 & 0 & 0 & 0 \\ 0 & -\dfrac{B}{J} & \dfrac{K_t}{J} & 0 & -\dfrac{1}{J} \\ 0 & -\dfrac{K_t}{L} & -\dfrac{x_4}{L} & -\dfrac{x_3}{L} & 0 \\ 0 & 0 & 0 & 0 & 0 \\ 0 & 0 & 0 & 0 & 0 \end{bmatrix} \tag{8}$$

$$H(x(t)) = \frac{\partial h}{\partial x}\bigg|_{x=x(t)} = \begin{bmatrix} 1 & 0 & 0 & 0 & 0 \end{bmatrix}$$

The linearization of the system (7) is the following:

$$\delta\ddot{x}(t) = F(x(t))\delta x(t) + \sigma(t)$$
$$y(t) = Hx(t) + \mu(t) \tag{9}$$

A first test to verify whether the EKF can be used to estimate the value of $R_t$ is to check the rank of the observability matrix for the linear system (9). This result to be as follows:

$$O = \begin{bmatrix} 1 & 0 & 0 & 0 & 0 \\ 0 & 1 & 0 & 0 & 0 \\ 0 & -\dfrac{B}{J} & \dfrac{K_t}{J} & 0 & -\dfrac{1}{J} \\ 0 & O_{4,2} & O_{4,3} & -\dfrac{K_t x_3}{L} & 0 \\ 0 & -\dfrac{B}{J}O_{4,2} - \dfrac{K_t}{J}O_{4,3} & \dfrac{K_t}{J}O_{4,2} - \dfrac{x_4}{L}O_{4,3} & -\dfrac{x_3}{L}O_{4,3} & -\dfrac{1}{J}O_{4,2} \end{bmatrix}$$

$$O_{4,2} = \left(\frac{B}{J}\right)^2 - \frac{K_t^2}{LJ} \tag{10}$$

$$O_{4,3} = -\frac{K_t B}{J^2} - \frac{K_t x_4}{J}$$

The observability matrix results to have full rank, thus confirming that the EKF can estimate all the states of the system defined in (7).

The system defined in (9) is then discretised, in order to implement a discrete version of the state estimator:

$$\delta x(t_k) = \Phi(t_k, t_{k-}, x(t_{k-1}))\delta x(t_{k-1}) + v(t_{k-1}) \tag{11}$$

where $\Phi$ is the exponential matrix for the system (9). The discrete system noise $v$ is related to the continuous one by the following equation:

$$\mathbf{v}(t_k) = \int_{t_k}^{t_{k+1}} \mathbf{\Phi}(t_{k+1}, s, \mathbf{x}(s)) \mathbf{\sigma}(s) ds \qquad (12)$$

Its covariance matrix, used in the EKF design, is then:

$$\mathbf{Q}_d(t_k) = \int_{t_k}^{t_{k+1}} \mathbf{\Phi}(t_{k+1}, s, \mathbf{x}(s)) \mathbf{Q}(s) \mathbf{\Phi}(t_{k+1}, s, \mathbf{x}(s))' ds \qquad (13)$$

Once the linearized and discretised version of the system (7) is obtained, the EKF for the system can be derived following known techniques.

For a given sampling time $t_k$, both the optimal estimate $\mathbf{X}_{k+1|k+1}$ and the covariance matrix thereof $\mathbf{P}_{k+1|k+1}$ are generated by the EKF through a two-step recursive loop.

The first step (prediction step) performs a prediction of both quantities, based on the previous estimates $\mathbf{X}_{k|k}$ and the deterministic input u(k). In an embodiment of the invention, a simple rectangular integration technique is used, so that the prediction step results in the following recursive equations:

$$\mathbf{x}_{k+1|k} = \mathbf{x}_{k|k} + \left[ \mathbf{f}(x_{k|k}) + \mathbf{B}u(k) \right] T$$
$$\mathbf{P}_{k+1|k} = \mathbf{P}_{k|k} + (\mathbf{F}_k \mathbf{P}_{k|k} + \mathbf{P}_{k|k} \mathbf{F}_k')T + \mathbf{Q}_d \qquad (14)$$

with $\mathbf{F}_k$ defined as in (8) and computed for $\mathbf{x} = \mathbf{x}_{k|k}$. T is the sampling period Tc of the pre-filter **203,** N times shorter than the servo sampling period Ts. It is worth noting that only the VCM input is actually updated at Tc, while the position signal is read at the servo sampling rate Ts. In order to provide the EKF with inter-sample values, the missing samples of the position signal are obtained by interpolation, using a first-order holder at Ts, followed by a sampler at Tc.

The second step (innovation step) corrects the predicted state estimation and its covariance matrix through a feedback correction scheme that makes use of the actual measured quantities (i.e., VCM position). This is realized by the following recursive relations:

$$\mathbf{x}_{k+1|k+1} = \mathbf{x}_{k+1|k} + \mathbf{L}_{k+1}(y(k+1) - \mathbf{H}\mathbf{x}_{k+1|k})$$
$$\mathbf{P}_{k+1|k+1} = \mathbf{P}_{k+1|k} - \mathbf{L}_k \mathbf{H}\mathbf{P}_{k+1|k} \qquad (15)$$

where the Kalman filter gain matrix $\mathbf{L}_k$ is defined by:

$$L_k = P_{k+1|k}H'(HP_{k+1|k}H' + R)^{-1} \qquad (16)$$

Other types of on-line estimations of the VCM characteristic parameters can be adopted, such as RLS (Recursive Least-Squares) estimation procedures of the VCM transfer function.

Preferably, the on-line estimation procedure of the characteristic parameters of the VCM is non-invasive, as the one described in detail by way of example, not to interfere with the VCM operation.

Although the detailed description provided in the foregoing referred to a voltage-mode drive of a disk drive VCM, this shall not be construed as a limitation: the invention can in fact be applied to the control of motors or inductive loads in general, and even more generally it can be applied when voltage-mode drive of complex impedance loads is desired.

**Claims**

1. A method of driving an electrical load (113) having a complex electrical impedance, comprising:

    providing a voltage-mode driver (**201**) generating drive signals for the electrical load in response to drive commands,

    **characterised by** comprising:

    filtering (**203**) the drive commands for the voltage-mode driver for obtaining compensated drive commands compensating a phase shift between electrical quantities (**V(t), I(t)**) delivered to the electrical load;
    supplying the compensated commands to the voltage-mode driver.

2. The method according to claim 1, in which the electrical load is an actuator (**113**) of a disk drive system (**103**), particularly a voice-coil motor controlling the position of a read/write head (**107**).

3. The method according to claim 3, in which said filtering comprises approximating a closed-loop current-mode drive.

4. The method according to claim 3, in which said filtering comprises inserting a zero in correspondence of a pole of a transfer function of the electrical load.

5. The method according to claim 4, in which said generating drive signals for the electrical load comprises generating a pulse width modulated output or a phase shift modulated output, with a duty cycle determined by the compensated commands.

6. The method according to any one of the preceding claims, comprising estimating (**205**) characteristic parameters ($R_t$) of the electrical load during the operation, and adapting said filtering to the estimated characteristic parameters.

7. The method according to claim 6, in which said estimating comprises implementing a Kalman filtering algorithm, particularly an extended Kalman filtering.

8. The method according to claim 7, in which said adapting the filtering comprises modifying filtering parameters (**A, B,C**) for tracking the phase shift between electrical quantities (**V(t), I(t)**) delivered to the electrical load.

9. A driver circuit for driving a complex electrical impedance load (**113**), comprising:

    a voltage-mode driver (**201**) generating drive signals for the electrical load in response to drive commands, and
    a drive commands generator (**117**) generating the drive commands,

    **characterised by** comprising:

    a compensation filter (**203**) receiving the drive commands and supplying the voltage-mode driver with compensated drive commands, the compensation filter compensating a phase shift between electrical quantities (**V(t), I(t)**) delivered to the electrical load by the voltage-mode driver.

10. The driver circuit according to claim 9, in which the compensation filter has a transfer function such that the driver circuit approximates a closed-loop current-mode drive.

11. The driver circuit according to claim 9 or 10, in which the compensation filter is an analogue filter.

12. The driver circuit according to claim 9 or 10, in which the compensation filter is a digital filter.

13. The driver circuit according to any one of claims 9 to 12, in which the voltage-mode driver is a pulse width modulator or a phase shift modulator, modulating a duty cycle according to the compensated commands.

14. The driver circuit according to any one of claims 9 to 13, further comprising estimator means (**205**) for estimating characteristic parameters ($R_t$) of the electrical load during the operation.

**15.** The driver circuit according to claim 14, in which the estimator means control the compensation filter for adapting the compensation filter to the estimated characteristic parameters, for tracking the phase shift between electrical quantities (**V(t), I(t)**) delivered to the electrical load.

**16.** The driver circuit according to claim 15, in which said estimator means comprise an extended Kalman filter.

**17.** A storage disk drive system, comprising:

at least one data storage disk (**107**);
a read/write head (**111**) for reading/writing data from/into the data storage disk;
a motor (**113**) for controlling the position of the read/write head, and
a driver circuit (**117**,**123**,**125**) for driving the motor,

**characterised in that** the driver circuit is realised in accordance with any one of claims 9 to 16.

FIG. 1

EP 1 372 259 A1

125

203

201

I(t)

V(t)

117

205

113

**FIG. 2**

301

VDD

201

3011

3012

303

3013

3014

GND

**FIG. 3**

EP 1 372 259 A1

203

IN(n)*B + IN(n-1)*C

IN(n)

| B<br>(B1,B2,B3..) |

$Z^{-1}$

IN(n-1)

| C<br>(C1,C2,C3..) |

| A<br>(A1,A2,A3..) |

$Z^{-1}$

OUT(n-1)

OUT(n)

**FIG. 4**

**European Patent Office**

**EUROPEAN SEARCH REPORT**

Application Number

EP 02 42 5387

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 898 283 A (BENNETT GEORGE JEFFREY) 27 April 1999 (1999-04-27) * column 3, line 9 - column 6, line 10; figures 1,3,4 * | 1,2,9, 11-13,17 | H02P7/29 H03K17/00 |
| X | US 5 859 512 A (BUETHKER HENRICUS C J) 12 January 1999 (1999-01-12) * column 4, line 4 - column 6, line 20; figure 1 * | 1,2,9, 11,13,17 | |
| X | EP 0 822 649 A (SGS THOMSON MICROELECTRONICS) 4 February 1998 (1998-02-04) * page 2, line 6-9 * * page 3, line 57 - page 4, line 35 * * page 6, line 2-57 * * figures 10,12B * | 1,2,9, 11-13,17 | |
| X | US 6 285 146 B1 (HARLAN GEORGE H) 4 September 2001 (2001-09-04) * column 12, line 57 - column 18, line 20; figures 6,7 * | 1,3, 9-11,13 | TECHNICAL FIELDS SEARCHED (Int.Cl.7) H02P H03K |
| X | WO 00 35074 A (LUKENICH STEFAN ;SCHMIDER FRITZ (DE); PAPST MOTOREN GMBH & CO KG ()) 15 June 2000 (2000-06-15) * page 1, paragraph 8 - page 5, paragraph 6; figure 1 * | 1,3, 9-11,13 | |

The present search report has been drawn up for all claims

| Place of search | Date of completion of the search | Examiner |
|---|---|---|
| MUNICH | 25 October 2002 | Moll, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 42 5387

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2002

| Patent document cited in search report | | Publication date | Patent family member(s) | | Publication date |
|---|---|---|---|---|---|
| US 5898283 | A | 27-04-1999 | NONE | | |
| US 5859512 | A | 12-01-1999 | DE | 69707205 D1 | 15-11-2001 |
| | | | DE | 69707205 T2 | 06-06-2002 |
| | | | EP | 0815640 A1 | 07-01-1998 |
| | | | WO | 9727667 A1 | 31-07-1997 |
| | | | JP | 11502700 T | 02-03-1999 |
| EP 0822649 | A | 04-02-1998 | EP | 0822649 A1 | 04-02-1998 |
| | | | DE | 69607838 D1 | 25-05-2000 |
| | | | DE | 69607838 T2 | 17-08-2000 |
| | | | JP | 10248290 A | 14-09-1998 |
| | | | US | 5838128 A | 17-11-1998 |
| US 6285146 | B1 | 04-09-2001 | US | 6188187 B1 | 13-02-2001 |
| | | | AU | 7581900 A | 17-04-2001 |
| | | | WO | 0120763 A1 | 22-03-2001 |
| | | | US | 2002105293 A1 | 08-08-2002 |
| | | | AU | 5467399 A | 28-02-2000 |
| | | | WO | 0008744 A2 | 17-02-2000 |
| WO 0035074 | A | 15-06-2000 | DE | 29920806 U1 | 20-04-2000 |
| | | | WO | 0035074 A1 | 15-06-2000 |
| | | | EP | 1142100 A1 | 10-10-2001 |
| | | | US | 6448726 B1 | 10-09-2002 |